# EUROPEAN PATENT APPLICATION

(11) **EP 4 625 563 A1**
(43) Date of publication of application: **01.10.2025**
(21) Application number: 24203691.1
(22) Date of filing: 30.09.2024
(51) Int. Cl.: H01M 10/04, H01M 50/152, H01M 50/164, H01M 50/179, H01M 50/184, H01M 50/186, H01M 50/188, H01M 50/593

(54) **COVER PLATE ASSEMBLY OF BATTERY CELL, BATTERY CELL, BATTERY ASSEMBLY, AND ELECTRIC DEVICE**

(30) Priority: 27.03.2024 CN 202420635714 U
(71) Applicant: BYD Company Limited, Shenzhen, Guangdong 518118 (CN)
(72) Inventor: CHEN, Jiankang, Shenzhen (CN); LIU, Yanchu, Shenzhen (CN); MA, Zhiying, Shenzhen (CN); CHEN, Songlin, Shenzhen (CN); WANG, Yadong, Shenzhen (CN)
(74) Representative: Taor, Simon Edward William

(57) **Abstract**

The present disclosure discloses a cover plate assembly of a battery cell, a battery cell, a battery assembly, and an electric device. The cover plate assembly of the battery cell includes a cover plate body, a pole, an insulating member, and a buffer member. A mounting opening is provided on the cover plate body. The pole is arranged through the mounting opening. The insulating member is arranged in the mounting opening and is located between the pole and the cover plate body, so that the cover plate body is insulated and spaced away from the pole. The pole has a first limiting member located on one side of the cover plate body. The first limiting member is configured to fasten the pole and the insulating member to the cover plate body through position limiting. The buffer member is arranged between the insulating member and the first limiting member. In the cover plate assembly of the battery cell according to embodiments of the present disclosure, the first limiting member can be prevented from directly pressing against the insulating member during molding to some extent, and an extrusion force applied by the first limiting member to the insulating member is dispersed and buffered. This avoids cracking of the insulating member to ensure operation performance of the insulating member, and can further provide support for the first limiting member to improve structural strength of the first limiting member after molding.

## Description

### FIELD

The present disclosure relates to the field of battery technologies, and in particular, to a cover plate assembly of a battery cell, a battery cell, a battery assembly, and an electric device.

### BACKGROUND

In an existing cover plate assembly of a battery cell, an insulating member is usually arranged between a pole and a cover plate body to implement insulation and matching between the pole and the cover plate body.

However, the existing pole is likely to cause damage to the insulating member during molding. This shortens service life of the insulating member and degrades insulation performance of the insulating member.

### SUMMARY

The present disclosure is intended to resolve at least one of technical problems existing in the related art. In view of this, a first objective of the present disclosure is to provide a cover plate assembly of a battery cell. In the cover plate assembly, a pole can be prevented from causing damage to an insulating member during molding to some extent, and the pole can be fastened and supported. This resolves a technical problem in the related art that a pole is likely to cause damage to an insulating member during molding.

A second objective of the present disclosure is to provide a battery cell having the cover plate assembly.

A third objective of the present disclosure is to provide a battery assembly having the battery cell.

A fourth objective of the present disclosure is to provide an electric device having the battery assembly.

A cover plate assembly of a battery cell according to embodiments of the present disclosure includes: a cover plate body, a mounting opening being provided on the cover plate body; a pole, the pole being arranged through the mounting opening; an insulating member, the insulating member being arranged in the mounting opening and being located between the pole and the cover plate body, so that the cover plate body is insulated and spaced away from the pole, the pole having a first limiting member located on one side of the cover plate body, and the first limiting member being configured to fasten the pole and the insulating member to the cover plate body through position limiting; and a buffer member, the buffer member being arranged between the insulating member and the first limiting member.

In the cover plate assembly of the battery cell according to the embodiments of the present disclosure, the buffer member is arranged between the insulating member and the first limiting member. In this way, during molding of the first limiting member, the buffer member can be used to limit and support the first limiting member, to improve structural strength of the first limiting member and ensure position stability of the first limiting member, so as to improve position stability of the pole and ensure performance of the pole. In addition, because the buffer member is arranged between the insulating member and the first limiting member, the first limiting member can be prevented from directly pressing against the insulating member during molding to some extent, and the buffer member can be further used to disperse and buffer an extrusion force applied by the first limiting member to the insulating member during molding. This prevents the first limiting member from causing damage to the insulating member to some extent, extends service life of the insulating member, and ensures insulation performance of the insulating member.

In some embodiments, an accommodating groove is provided on the buffer member, and at least part of the first limiting member is arranged in the accommodating groove, so that at least part of the buffer member is located at a periphery of the first limiting member.

In some embodiments, a thickness H1 of the first limiting member ranges from 0.5 mm to 1.5 mm.

In some embodiments, a thickness H2 of the at least part of the buffer member located at the periphery of the first limiting member is greater than the thickness H1 of the first limiting member; and/or a width H3 of the at least part of the buffer member located at the periphery of the first limiting member ranges from 1 mm to 3 mm.

In some embodiments, an outer surface of the first limiting member is flush with an outer surface of the buffer member located at the periphery of the first limiting member.

In some embodiments, a width H4 of the accommodating groove ranges from 0.2 mm to 2 mm; and/or a distance H5 between a bottom wall of the accommodating groove and a bottom wall of the buffer member ranges from 0.4 mm to 2.5 mm.

In some embodiments, the pole is welded to the buffer member.

In some embodiments, the pole is a hollow member for defining an electrolyte solution filling channel, the electrolyte solution filling channel is provided with an inlet and an outlet, and at least one of the inlet and the outlet is provided with a blocking member for closing the inlet or the outlet.

In some embodiments, the inlet and the outlet are each provided with the blocking member.

In some embodiments, along a radial direction of the pole, the buffer member and the insulating member are matched to limit movement displacement of the buffer member.

In some embodiments, a ring-shaped first protrusion is arranged on the insulating member, and the first protrusion is arranged around a peripheral wall of the buffer member.

In some embodiments, a second protrusion protruding toward the buffer member is arranged on the insulating member, and the insulating member is provided with a stop surface located on an inner side, facing the mounting opening, of the second protrusion; and a matching groove is provided on the buffer member, the second protrusion is matched with the matching groove, and a part of the buffer member is matched with the stop surface.

In some embodiments, a depth-of-concavity H6 of the matching groove ranges from 0.3 mm to 1 mm.

In some embodiments, the matching groove and the accommodating groove are provided spaced away along a thickness direction of the buffer member.

In some embodiments, along a radial direction of the buffer member, a minimum spacing H7 between the matching groove and the accommodating groove ranges from 0.35 mm to 1.5 mm; and/or along an axial direction of the buffer member, a depth-of-concavity of the matching groove is less than a distance between a bottom wall of the accommodating groove and a bottom wall of the buffer member.

A battery cell according to embodiments of the present disclosure includes: a housing; a cover plate assembly, the cover plate assembly being arranged at an end of the housing, and the cover plate assembly being the foregoing cover plate assembly; and an electrode core, the electrode core being arranged in the housing, a first connection tab being arranged on the electrode core, and the first connection tab being electrically connected to a pole.

In the battery cell according to the embodiments of the present disclosure, the foregoing cover plate assembly is used, to ensure operation performance of the battery cell.

In some embodiments, the battery cell further includes a collecting pan, the collecting pan being arranged between the first connection tab and the cover plate assembly, and the collecting pan being electrically connected to the first connection tab and the pole separately.

In some embodiments, the collecting pan includes a pan body, at least part of the pan body protrudes in a direction toward the electrode core to form, on the pan body, a first connection piece protruding toward the cover plate assembly and a second connection piece protruding toward the electrode core, the first connection piece is electrically connected to the pole, and the second connection piece is electrically connected to the first connection tab.

In some embodiments, a thickness of the first connection piece is greater than a thickness of the second connection piece; and/or a thickness L1 of the second connection piece ranges from 0.1 mm to 0.8 mm, and a thickness of the first connection piece is L2, where 0 mm < L2 - L1 < 0.5 mm.

In some embodiments, the collecting pan includes a first connection piece, an intermediate member, and a second connection piece, the first connection piece, the intermediate member, and the second connection piece are stacked along an axial direction of the electrode core, the first connection piece is electrically connected to the pole, and the second connection piece is electrically connected to the first connection tab.

In some embodiments, the battery cell is a cylindrical battery.

A battery assembly according to embodiments of the present disclosure includes multiple battery cells.

In the battery assembly according to the embodiments of the present disclosure, the foregoing battery cell is used, to ensure operation performance of the battery assembly.

An electric device according to embodiments of the present disclosure includes the foregoing battery assembly.

In the electric device according to the embodiments of the present disclosure, the foregoing battery assembly is used, to ensure operation performance of the electric device and improve user experience.

Additional aspects and advantages of the present disclosure become clear in the following descriptions or are learned from practice of the present disclosure.

### BRIEF DESCRIPTION OF THE DRAWINGS

The foregoing and/or other aspects and advantages of the present disclosure become clear and readily appreciated from the following descriptions made with reference to the drawings.
FIG. 1 is a schematic diagram of a cover plate assembly matched with a housing according to some embodiments of the present disclosure;
FIG. 2 is an exploded view of a cover plate assembly and a housing according to some embodiments of the present disclosure;
FIG. 3 is a cross-sectional view of a partial structure of a battery cell according to some embodiments of the present disclosure;
FIG. 4 is a locally enlarged view of a region I in FIG. 3;
FIG. 5 is a schematic diagram of a buffer member according to some embodiments of the present disclosure;
FIG. 6 is a schematic diagram of a buffer member from another angle according to some embodiments of the present disclosure;
FIG. 7 is an exploded view of a battery cell according to some embodiments of the present disclosure;
FIG. 8 is a schematic diagram of a collecting pan according to some embodiments of the present disclosure;
FIG. 9 is a schematic diagram of a collecting pan matched with a negative electrode cover plate according to some other embodiments of the present disclosure, where the collecting pan is in an unfolded state; and
FIG. 10 is a schematic diagram of a collecting pan according to some other embodiments of the present disclosure, where the collecting pan is in a folding state.

In the drawings:
1000: battery cell;
100: collecting pan;
   110: first connection piece;
   120: second connection piece; 122: identification region;
   130: intermediate member;
   140: pan body;
200: cover plate assembly;
   210: cover plate body; 212: mounting opening;
   250: pole;
      251: first limiting member; 252: second limiting member;
      211: electrolyte solution filling channel; 2111: inlet; 2112: outlet;
   260: negative electrode cover plate;
   270: top spacer;
   400: insulating member;
      410: first protrusion;
      420: second protrusion; 421: stop surface;
      430: insulating piece;
      440: sealing ring;
   500: buffer member;
      510: accommodating groove;
      520: matching groove;
300: housing;
320: electrode core;
600: blocking member; 220: sealing nail; 230: sealing cover;
700: explosion-proof valve; and
800: protection piece.

### DETAILED DESCRIPTION

Embodiments of the present disclosure are described below in detail, and examples of the embodiments are shown in the drawings, throughout which identical or similar elements or elements with identical or similar functions are represented by identical or similar reference numerals. The embodiments described below with reference to the drawings are examples only for describing the present disclosure, and should not be construed as a limitation on the present disclosure.

In the descriptions of the present disclosure, it should be understood that orientation or position relationships indicated by the terms "center", "longitudinal", "transverse", "length", "width", "thickness", "on", "below", "front", "back", "left", "right", "vertical", "horizontal", "top", "bottom", "inside", "outside", "clockwise", "counterclockwise", "axial", "radial", "circumferential", and the like are based on orientation or position relationships shown in the drawings, and are merely intended for ease and brevity of description of the present disclosure, rather than indicating or implying that an indicated device or component needs to have a specific orientation or needs to be constructed and operated in a specific orientation. Therefore, such terms should not be construed as a limitation on the present disclosure.

A cover plate assembly 200 of a battery cell 1000 according to embodiments of the present disclosure is described below with reference to the drawings.

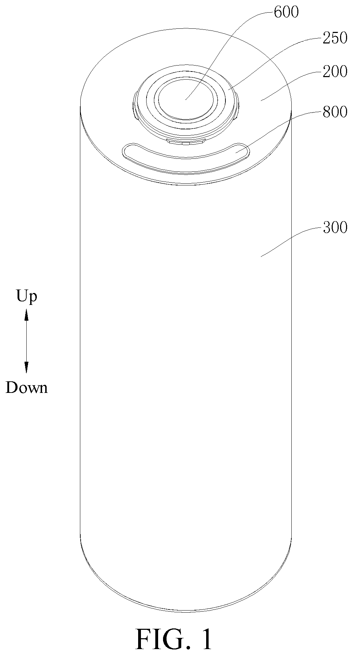

As shown in FIG. 1, FIG. 2, and FIG. 3, a cover plate assembly 200 of a battery cell 1000 according to embodiments of the present disclosure includes a cover plate body 210, a pole 250, an insulating member 400, and a buffer member 500.

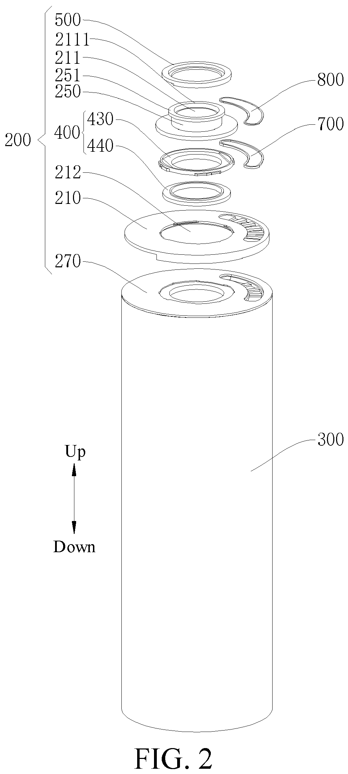

As shown in FIG. 2, a mounting opening 212 is provided on the cover plate body 210.

As shown in FIG. 1, FIG. 2, and FIG. 3, the pole 250 is arranged through the mounting opening 212. This may also be understood as that the pole 250 is arranged on the cover plate body 210 through the mounting opening 212, to reduce difficulty of assembling the pole 250 and the cover plate body 210.

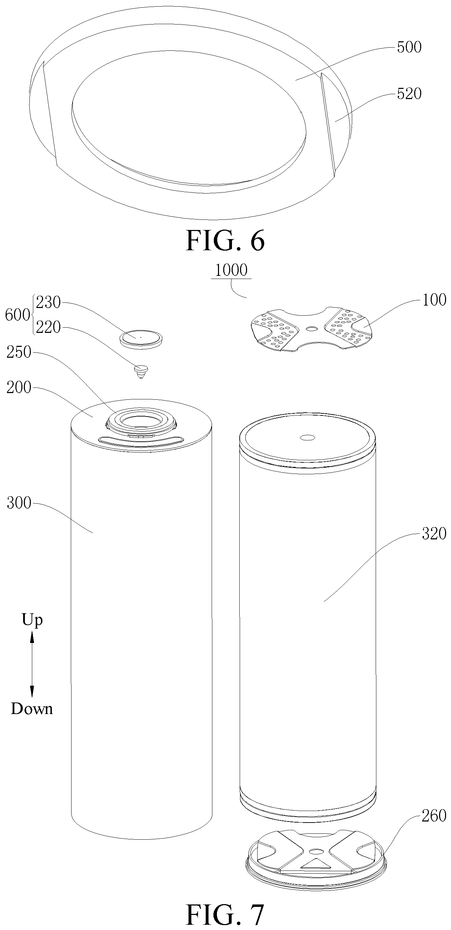

In some embodiments, the pole 250 is made of an aluminum material, the aluminum material is connected to a collecting pan 100 (for a specific structure of the collecting pan 100, refer to FIG. 7), and the collecting pan 100 is connected to an electrode core 320, to implement an electrical connection between the pole 250 and the electrode core 320. This facilitates lead-out of a current of the electrode core 320 through the pole 250, to ensure operation performance of the electrode core 320.

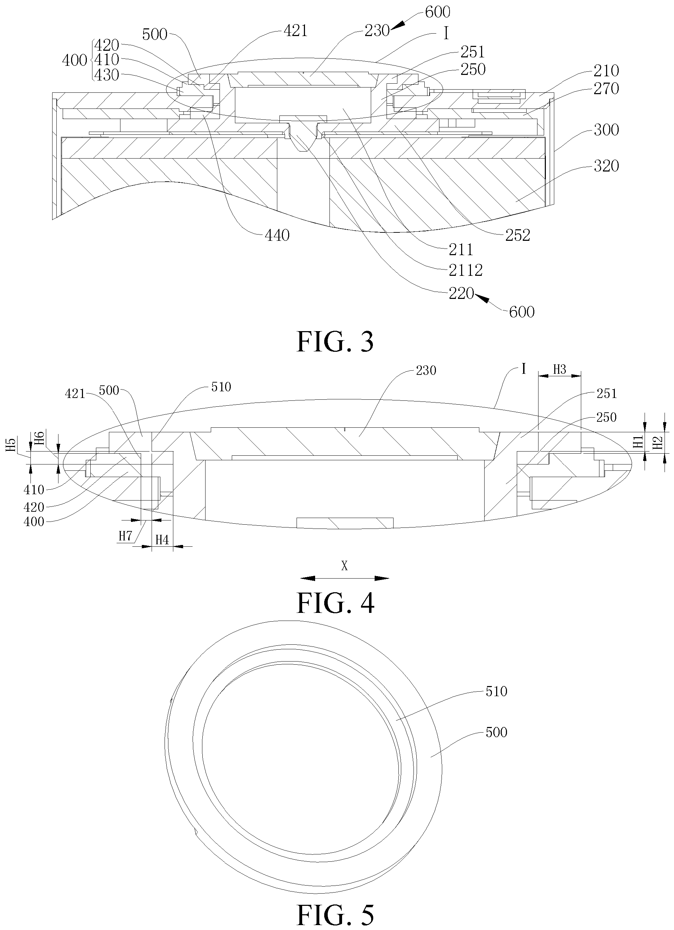

As shown in FIG. 2 and FIG. 3, the insulating member 400 is arranged in the mounting opening 212 and is located between the pole 250 and the cover plate body 210, so that the cover plate body 210 is insulated and spaced away from the pole 250. The pole 250 has a first limiting member 251 located on one side of the cover plate body 210. The first limiting member 251 is configured to fasten the pole 250 and the insulating member 400 to the cover plate body 210 through position limiting. The insulating member 400 is arranged, so that the cover plate body 210 is insulated and spaced away from the pole 250. This can avoid an electrical connection between the cover plate body 210 and the pole 250 to some extent, to ensure operation performance of the battery cell 1000.

In addition, the first limiting member 251 located on one side of the cover plate body 210 is arranged on the pole 250, and the first limiting member 251 is configured to fasten the pole 250 and the insulating member 400 to the cover plate body 210 through position limiting, so that the pole 250 is matched with the cover plate body 210 through position limiting and the insulating member 400 is matched with the cover plate body 210 through position limiting. In this way, the pole 250 and the insulating member 400 are fastened to the cover plate body 210, so that positions of the pole 250 and the insulating member 400 are stable, to ensure operation performance of the pole 250 and the insulating member 400.

In some embodiments, as shown in FIG. 3, the pole 250 further has a second limiting member 252 located on the other side of the cover plate body 210. The first limiting member 251 and the second limiting member 252 are arranged on two opposite sides of the cover plate body 210 respectively, to fasten the pole 250 to the cover plate body 210. In this way, the cover plate body 210 can be used to support the pole 250 to improve position stability of the pole 250, and further, the pole 250 can be used to fasten the insulating member 400 to the cover plate body 210 through positing limiting. This also facilitates lead-out of a current of the electrode core 320 through the pole 250.

In the descriptions of the present disclosure, a feature defined by "first" or "second" may explicitly or implicitly include one or more features. The terms are intended to distinguish between features without indicating an order or importance.

In some embodiments, the pole 250 is molded through heading, so that the first limiting member 251 and the second limiting member 252 are formed on the pole 250, and the first limiting member 251 and the second limiting member 252 can be arranged on two opposite sides of the cover plate body 210.

In some embodiments, as shown in FIG. 2 and FIG. 3, the insulating member 400 includes an insulating piece 430 and a sealing ring 440. The insulating piece 430 is arranged on one side of the cover plate body 210, and a partial structure of the insulating piece 430 extends into the mounting opening 212. The sealing ring 440 is arranged on the other side of the cover plate body 210, and a partial structure of the sealing ring 440 extends into the mounting opening 212. In this way, the insulating member 400 is arranged in the mounting opening 212 and is located between the pole 250 and the cover plate body 210, so that the cover plate body 210 is insulated and spaced away from the pole 250, and difficulty of mounting the insulating member 400 and the cover plate body 210 is reduced.

In some embodiments, as shown in FIG. 3 and FIG. 5, the insulating piece 430 is arranged on an outer side of the cover plate body 210, and the sealing ring 440 is arranged on an inner side of the cover plate body 210.

In some embodiments, the insulating piece 430 is obtained through injection molding by using high-performance thermoplastic resin, for example, polyphenylene sulfide, to ensure insulation performance of the insulating piece 430, so that the cover plate body 210 can be effectively insulated and spaced away from the pole 250 to improve operation performance of the battery cell 1000. The sealing ring 440 is made of fluorine rubber, ethylene propylene diene monomer, or meltable polytetrafluoroethylene. This ensures insulation performance of the sealing ring 440, and can further enable the sealing ring 440 to have specific sealing performance, to provide a sealing function for the pole 250 and avoid overflow of an electrolyte solution in the battery cell 1000 to some extent.

As shown in FIG. 3, the buffer member 500 is arranged between the insulating member 400 and the first limiting member 251.

It should be noted that, because the pole 250 is molded through the heading process, a part of the pole 250 needs to be bent in a direction toward the insulating member 400 to form the first limiting member 251 during molding of the pole 250. However, the insulating member 400 has low structural strength, and therefore cannot support the first limiting member 251 during molding of the first limiting member 251. This reduces structural strength of the first limiting member 251 after molding. In addition, the first limiting member 251 also presses against the insulating member 400 during molding, and is likely to cause damage to the insulating member 400.

Therefore, in the present disclosure, the buffer member 500 is arranged between the insulating member 400 and the first limiting member 251. In this way, during molding of the first limiting member 251, the buffer member 500 can be used to limit and support the first limiting member 251, to improve structural strength of the first limiting member 251 after molding and ensure position stability of the first limiting member 251, so as to improve position stability of the pole 250 and ensure performance of the pole 250. In addition, the first limiting member 251 can be further prevented from directly pressing against the insulating member 400 during molding to some extent, and the buffer member 500 can be further used to disperse and buffer an extrusion force applied by the first limiting member 251 to the insulating member 400 during molding. This avoids cracking of the insulating member 400 due to extrusion by the first limiting member 251 to some extent, extends service life of the insulating member 400, and ensures insulation performance of the insulating member 400.

In other words, in the present disclosure, because the buffer member 500 is arranged, structural strength of the first limiting member 251 after molding is ensured, the first limiting member 251 can be further prevented from directly pressing against the insulating member 400 during molding to some extent, and the buffer member 500 can be further used to disperse and buffer an extrusion force applied by the first limiting member 251 to the insulating member 400, to avoid damage to the insulating member 400 to some extent, so as to ensure insulation performance of the insulating member 400 and ensure operation performance of the battery cell 1000.

It can be learned from the foregoing structure that, in the cover plate assembly 200 of the battery cell 1000 according to the embodiments of the present disclosure, the buffer member 500 is arranged between the insulating member 400 and the first limiting member 251. In this way, structural strength of the first limiting member 251 after molding can be ensured, and the buffer member 500 can be used to support the first limiting member 251 to improve position stability of the first limiting member 251. In addition, a force exerted by the first limiting member 251 during molding can be further applied to the buffer member 500, so that the buffer member 500 is used to disperse and buffer an extrusion force applied by the first limiting member 251 to the insulating member 400. In addition, the first limiting member 251 can be further prevented from directly pressing against the insulating member 400 and causing damage to the insulating member 400 during molding to some extent, to ensure insulation performance of the insulating member 400 and ensure operation performance of the battery cell 1000.

It can be understood that, compared with the related art, in the present disclosure, the buffer member 500 is arranged between the insulating member 400 and the first limiting member 251, to ensure structural strength of the first limiting member 251 after molding, prevent the first limiting member 251 from directly pressing against the insulating member 400 and causing damage to the insulating member 400 during molding to some extent, and disperse and buffer an extrusion force applied by the first limiting member 251 to the insulating member 400, so as to ensure insulation performance of the insulating member 400.

In some embodiments, the buffer member 500 is obtained by molding an aluminum material through stamping. This reduces difficulty of molding the buffer member 500, and can further enable the buffer member 500 to have specific structural strength. In this way, the buffer member 500 can be used to limit and support the first limiting member 251, to improve structural strength of the first limiting member 251 after molding, prevent the first limiting member 251 from directly pressing against the insulating member 400 and causing damage to the insulating member 400 during molding to some extent, and extend service life of the insulating member 400.

It should be noted that the foregoing aluminum material may be series 1 aluminum or aluminum of other series. This is not specifically limited herein.

In some embodiments, as shown in FIG. 2, the cover plate assembly 200 further includes an explosion-proof valve 700. The explosion-proof valve 700 is arranged on the cover plate body 210. The explosion-proof valve 700 is configured to break when pressure in the battery cell 1000 is large, to discharge the pressure in the battery cell 1000, so as to improve safety of using the battery cell 1000.

In some embodiments, as shown in FIG. 1 and FIG. 2, the cover plate assembly 200 further includes a protection piece 800. The protection piece 800 is arranged on an outer side of the explosion-proof valve 700 to protect the explosion-proof valve 700. The protection piece 800 prevents an external foreign object from causing damage to the explosion-proof valve 700 to some extent, so as to ensure performance of the explosion-proof valve 700.

In some embodiments, as shown in FIG. 2 and 3, the cover plate assembly 200 further includes a top spacer 270. The top spacer 270 is made of a polypropylene material and is arranged on the other side of the cover plate body 210, and a partial structure of the top spacer 270 is located between the second limiting member 252 of the pole 250 and the cover plate body 210. In this way, the top spacer 270 can be used to provide an insulation function for the pole 250 and the cover plate body 210, and the top spacer 270 can be further used to protect the explosion-proof valve 700, to prevent the electrode core 320 from causing damage to the explosion-proof valve 700 to some extent, and ensure performance of the explosion-proof valve 700.

In some embodiments, the pole 250 is welded to the buffer member 500, so that the pole 250 is fastened to the buffer member 500, and strength of a connection between the pole 250 and the buffer member 500 can be further ensured. In this way, the buffer member 500 can be used to support the pole 250 to improve position stability of the pole 250, and the buffer member 500 can be further used to ensure structural strength of the pole 250 after molding.

The welding herein may be laser welding.

In some embodiments, as shown in FIG. 3, FIG. 4, and FIG. 5, an accommodating groove 510 is provided on the buffer member 500, and at least part of the first limiting member 251 is arranged in the accommodating groove 510, so that at least part of the buffer member 500 is located a periphery of the first limiting member 251. This means that at least part of the buffer member 500 may be arranged at the periphery of the first limiting member 251 when at least part of the first limiting member 251 is arranged in the accommodating groove 510, so that the buffer member 500 can be used to isolate the pole 250. This prevents the pole 250 from directly pressing against the insulating member 400 and causing cracking of the insulating member 400 during molding to some extent, and therefore avoids risks of electrolyte solution leakage and poor insulation and voltage withstand performance to some extent.

In some embodiments, the pole 250 is matched with the buffer member 500 through riveting, and the accommodating groove 510 is provided on the buffer member 500. In this way, during matching between the pole 250 and the buffer member 500, the accommodating groove 510 can be used to provide space for flipping of the first limiting member 251, to reduce difficulty of molding the first limiting member 251. In addition, during flipping of the first limiting member 251, it can be ensured that a flanging force of the pole 250 can be applied to the buffer member 500, to disperse and buffer an extrusion force applied by the pole 250 to the insulating member 400. This prevents the buffer member 500 from directly pressing against the insulating member 400 and causing cracking of the insulating member 400 to some extent, and therefore avoids risks of electrolyte solution leakage and poor insulation and voltage withstand performance to some extent.

In addition, because the buffer member 500 exists, during riveting of the first limiting member 251, cracking of the insulating member 400 caused by extrusion against a side edge of the insulating member 400 due to riveting interference can be further avoided to some extent.

In some embodiments, a thickness of the first limiting member 251 ranges from 0.5 mm to 1.5 mm. The thickness of the first limiting member 251 herein may be understood as H1 shown in FIG. 4. When the thickness of the first limiting member 251 is small, structural strength of the first limiting member 251 is reduced, and therefore strength of matching between the pole 250 and the buffer member 500 is reduced. When the thickness of the first limiting member 251 is large, difficulty of molding the first limiting member 251 during riveting of the pole 250 increases, and consequently, a sealing gap between the first limiting member 251 molded through riveting and the buffer member 500 is large, affecting effect of matching between the pole 250 and the buffer member 500.

Therefore, in the present disclosure, the thickness of the first limiting member 251 is set to range from 0.5 mm to 1.5 mm. This ensures structural strength of the first limiting member 251, and can further reduce difficulty of molding the first limiting member 251 and ensure sealing effect for the first limiting member 251 molded through riveting and the buffer member 500, so as to ensure effect of matching between the pole 250 and the buffer member 500.

In some embodiments, the thickness of the first limiting member 251 ranges from 0.5 mm to 0.9 mm.

In a specific example, the thickness of the first limiting member 251 is 0.5 mm, 0.7 mm, 0.9 mm, 1 mm, 1.2 mm, 1.5 mm, or the like.

In some embodiments, a thickness of the at least part of the buffer member 500 located at the periphery of the first limiting member 251 is greater than the thickness of the first limiting member 251. The thickness of the at least part of the buffer member 500 located at the periphery of the first limiting member 251 herein may be understood as H2 shown in FIG. 4.

To be specific, as shown in FIG. 4, H2 > H1. A reason is as follows: When H2 ≤ H1, a risk that the insulating member 400 is burned by a welding depth-of-fusion of the pole 250 and the buffer member 500 exists to some extent, degrading operation performance of the insulating member 400.

Therefore, the thickness of the at least part of the buffer member 500 located at the periphery of the first limiting member 251 is set to be greater than the thickness of the first limiting member 251. This can prevent the insulating member 400 from being burned by the welding depth-of-fusion of the pole 250 and the buffer member 500 during welding to some extent, so as to extend service life of the insulating member 400 and ensure operation performance of the insulating member 400.

The welding depth-of-fusion is a depth by which a welded material is melted on a cross section of a welding joint between the pole 250 and the buffer member 500.

In some embodiments, a width of the at least part of the buffer member 500 located at the periphery of the first limiting member 251 ranges from 1 mm to 3 mm. The width of the at least part of the buffer member 500 located at the periphery of the first limiting member 251 herein may be understood as H3 shown in FIG. 4. When the width of the at least part of the buffer member 500 located at the periphery of the first limiting member 251 is small, a risk of burning the insulating member 400 located at a periphery of the buffer member 500 exists during welding between the pole 250 and the buffer member 500. This degrades operation performance of the insulating member 400, and further reduces structural strength of the buffer member 500. When the width of the at least part at the first limiting member 251 is large, costs of manufacturing the buffer member 500 increase, and the buffer member 500 occupies large space, reducing space utilization.

Therefore, in the present disclosure, the width of the at least part of the buffer member 500 located at the periphery of the first limiting member 251 is set to range from 1 mm to 3 mm. In this way, during welding between the pole 250 and the buffer member 500, the insulating member 400 located at the periphery of the buffer member 500 can be prevented from being burned to some extent, to ensure operation performance of the insulating member 400. In addition, this can further ensure structural strength of the buffer member 500, reduce costs of manufacturing the buffer member 500, and reduce space occupied by the buffer member 500, to improve space utilization.

In some embodiments, the width of the at least part of the buffer member 500 located at the periphery of the first limiting member 251 ranges from 1.5 mm to 2 mm.

In a specific example, the width of the at least part of the buffer member 500 located at the periphery of the first limiting member 251 is 1 mm, 1.5 mm, 2 mm, 2.5 mm, 3 mm, or the like.

In some embodiments, as shown in FIG. 3 and FIG. 4, an outer surface of the first limiting member 251 is flush with an outer surface of the buffer member 500 located at the periphery of the first limiting member 251. In this way, the outer surface of the first limiting member 251 and the outer surface of the buffer member 500 located at the periphery of the first limiting member 251 can be on one plane, to improve strength of a connection between the pole 250 and the buffer member 500 and ensure connection quality.

In some embodiments, a width of the accommodating groove 510 ranges from 0.2 mm to 2 mm. The width of the accommodating groove 510 herein may be understood as H4 shown in FIG. 4. When the width of the accommodating groove 510 is excessively small, strength of a connection between the pole 250 and the buffer member 500 is reduced, difficulty of molding the accommodating groove 510 increases, and flatness of the accommodating groove 510 cannot be effectively ensured. Because the accommodating groove 510 is usually molded during riveting between the pole 250 and the buffer member 500, when the width of the accommodating groove 510 is excessively large, the buffer member 500 is likely to crack after the pole 250 is riveted to the buffer member 500, affecting operation performance of the buffer member 500.

Therefore, in the present disclosure, the width of the accommodating groove 510 is set to range from 0.2 mm to 2 mm. This ensures strength of a connection between the pole 250 and the buffer member 500, and can further reduce difficulty of molding the accommodating groove 510 and prevent the buffer member 500 from cracking to some extent after the accommodating groove 510 is molded. In addition, this further helps ensure flatness of the accommodating groove 510, to ensure strength of a connection between the pole 250 and the buffer member 500.

In a specific example, the width of the accommodating groove 510 is 0.2 mm, 0.5 mm, 1 mm, 1.5 mm, 2 mm, or the like.

In some embodiments, a distance between a bottom wall of the accommodating groove 510 and a bottom wall of the buffer member 500 ranges from 0.4 mm to 2.5 mm. The distance between the bottom wall of the accommodating groove 510 and the bottom wall of the buffer member 500 herein may be understood as H5 shown in FIG. 4. When the distance between the bottom wall of the accommodating groove 510 and the bottom wall of the buffer member 500 is small, structural strength of the buffer member 500 is reduced, and consequently, a risk that the buffer member 500 is deformed and presses against and causes damage to the insulating member 400 is likely to occur during riveting between the pole 250 and the buffer member 500. When the distance between the bottom wall of the accommodating groove 510 and the bottom wall of the buffer member 500 is large, costs of manufacturing the buffer member 500 increase, and the buffer member 500 occupies large space, reducing space utilization.

Therefore, in the present disclosure, the distance between the bottom wall of the accommodating groove 510 and the bottom wall of the buffer member 500 is set to range from 0.4 mm to 2.5 mm. This ensures structural strength of the buffer member 500, and can further reduce costs of manufacturing the buffer member 500 and reduce space occupied by the buffer member 500, to improve space utilization.

In some embodiments, the distance between the bottom wall of the accommodating groove 510 and the bottom wall of the buffer member 500 ranges from 0.8 mm to 1.2 mm.

In a specific example, the distance between the bottom wall of the accommodating groove 510 and the bottom wall of the buffer member 500 is 0.4 mm, 0.5 mm, 0.8 mm, 1 mm, 1.2 mm, 1.5 mm, 2 mm, 2.5 mm, or the like.

In some embodiments, as shown in FIG. 2 and FIG. 3, the pole 250 is a hollow member for defining an electrolyte solution filling channel 211, the electrolyte solution filling channel 211 is provided with an inlet 2111 and an outlet 2112, and at least one of the inlet 2111 and the outlet 2112 is provided with a blocking member 600 for closing the inlet 2111 or the outlet 2112. To be specific, the electrolyte solution filling channel 211 having the inlet 2111 and the outlet 2112 is formed in the pole 250, and at least one of the inlet 2111 and the outlet 2112 is provided with the blocking member 600. The electrolyte solution filling channel 211 is provided, to facilitate electrolyte solution filling toward the electrode core 320 through the electrolyte solution filling channel 211 and ensure operation performance of the electrode core 320. In addition, at least one of the inlet 2111 and the outlet 2112 is provided with the blocking member 600, so that the blocking member 600 can be used to block the electrolyte solution filling channel 211. This prevents an external foreign object from entering the battery cell 1000 through the electrolyte solution filling channel 211 to some extent, and can further prevent an electrolyte solution in the battery cell 1000 from overflowing through the electrolyte solution filling channel 211 to some extent, so as to ensure operation performance of the battery cell 1000.

Moreover, the pole 250 is arranged as a hollow member for defining the electrolyte solution filling channel 211. This can further avoid providing the electrolyte solution filling channel 211 on the cover plate body 210, to reduce difficulty of molding the electrolyte solution filling channel 211. In addition, the electrolyte solution filling channel 211 is provided on the pole 250, so that the electrolyte solution filling channel 211 can be provided directly facing a winding hole of the electrode core 320 when the electrode core 320 is formed into a cylindrical shape, to ensure electrolyte solution filling effect.

In some embodiments, as shown in FIG. 3, the inlet 2111 and the outlet 2112 are each provided with the blocking member 600. In this way, the electrolyte solution filling channel 211 is blocked by the blocking members 600, to prevent an external foreign object from entering the battery cell 1000 through the electrolyte solution filling channel 211 to some extent and further prevent an electrolyte solution in the battery cell 1000 from overflowing through the electrolyte solution filling channel 211 to some extent, so as to ensure operation performance of the battery cell 1000.

In a specific example, after electrolyte solution filling through the electrolyte solution filling channel 211 is completed, the inlet 2111 and the outlet 2112 of the electrolyte solution filling channel 211 are blocked by the blocking members 600.

In some embodiments, as shown in FIG. 1, FIG. 3, and FIG. 7, the blocking member 600 includes a sealing nail 220 and a sealing cover 230. The sealing nail 220 is molded through injection molding, and the sealing cover 230 is molded through stamping. After electrolyte solution filling through the electrolyte solution filling channel 211 is completed, the sealing nail 220 is first used to block the outlet 2112 of the electrolyte solution filling channel 211, and then the sealing cover 230 is welded to the inlet 2111 of electrolyte solution filling channel 211 through laser, to seal and block the electrolyte solution filling channel 211 by using the blocking member 600.

In addition, because the outlet 2112 of the electrolyte solution filling channel 211 is blocked by the sealing nail 220, welding slag can be further prevented from falling into the electrode core 320 during welding of the sealing cover 230 to some extent, so as to avoid risks such as a short circuit of the electrode core 320 to some extent.

In some embodiments, along a radial direction of the pole 250, the buffer member 500 and the insulating member 400 are matched to limit movement displacement of the buffer member 500. To be specific, the buffer member 500 is matched with the insulating member 400, so that displacement of the buffer member 500 along the radial direction of the pole 250 can be avoided to some extent, to ensure position stability of the buffer member 500. During molding of the pole 250, this can ensure that the first limiting member 251 can accurately act on the buffer member 500, ensure structural strength of the first limiting member 251 after forming, and prevent the first limiting member 251 from directly pressing against the insulating member 400 and causing damage to the insulating member 400 to some extent.

In some embodiments, as shown in FIG. 3, a ring-shaped first protrusion 410 is arranged on the insulating member 400, and the first protrusion 410 is arranged around a peripheral wall of the buffer member 500. In this way, the insulating member 400 can be used to limit a position of the buffer member 500 to avoid displacement of the buffer member 500 along the radial direction of the pole 250 to some extent, so that the buffer member 500 is matched with the insulating member 400 through position limiting.

In addition, the foregoing arrangement can further implement a wrapping design for the buffer member 500 on the insulating member 400, to avoid a risk of high-voltage breakdown to some extent.

In some embodiments, as shown in FIG. 3 and FIG. 6, a second protrusion 420 protruding toward the buffer member 500 is arranged on the insulating member 400, and the insulating member 400 is provided with a stop surface 421 located on an inner side, facing the mounting opening 212, of the second protrusion 420. A matching groove 520 is provided on the buffer member 500, the second protrusion 420 is matched with the matching groove 520, and a part of the buffer member 500 is matched with the stop surface 421. To be specific, both the ring-shaped first protrusion 410 and the second protrusion 420 protruding toward the buffer member 500 are formed on the insulating member 400, the stop surface 421 is formed on the inner side, facing the mounting opening 212, of the second protrusion 420, the matching groove 520 on the buffer member 500 is matched with the second protrusion 420, and a part of the buffer member 500 is matched with the stop surface 421, so that the insulating member 400 is matched with the buffer member 500 through position limiting. This further improves position stability of the buffer member 500 and avoids displacement of the buffer member 500 to some extent, so as to ensure relative position stability of the insulating member 400 and the buffer member 500.

In some embodiments, as shown in FIG. 6, the matching grooves 520 are provided spaced away on two opposite sides of the buffer member 500. In this way, after the matching grooves 520 are matched with the second protrusions 420 through position limiting, the buffer member 500 can be further prevented from rotating relative to the insulating member 400 to some extent, to avoid rotation of the pole 250 during movement of the cover plate assembly 200 to some extent, and provide torsional strength for the pole 250.

To be specific, the second protrusion 420 protruding toward the buffer member 500 is arranged on the insulating member 400, the matching groove 520 is provided on the buffer member 500, and the second protrusion 420 is matched with the matching groove 520, so that relative positions of the insulating member 400 and the buffer member 500 are stable, and torsional strength can be further provided for the pole 250 to improve position stability of the pole 250.

In some embodiments, a depth-of-concavity of the matching groove 520 ranges from 0.3 mm to 1 mm. The depth-of-concavity of the matching groove 520 herein may be understood as H6 shown in FIG. 4. When the depth-of-concavity of the matching groove 520 is small, performance of the buffer member 500 to provide torque strength for the pole 250 is affected. When the depth-of-concavity of the matching groove 520 is large, structural strength of the buffer member 500 is reduced, and a protrusion height of the second protrusion 420 also needs to be increased correspondingly, causing an increase in manufacturing costs.

Therefore, in the present disclosure, the depth-of-concavity of the matching groove 520 is set to range from 0.3 mm to 1 mm. This improves performance of the buffer member 500 to provide torque strength for the pole 250, and can further ensure structural strength of the buffer member 500 and reduce costs of manufacturing the second protrusion 420.

In some embodiments, the depth-of-concavity of the matching groove 520 ranges from 0.5 mm to 0.8 mm.

In a specific example, the depth-of-concavity of the matching groove 520 is 0.3 mm, 0.5 mm, 0.8 mm, 1 mm, or the like.

In some embodiments, as shown in FIG. 4, FIG. 5, and FIG. 6, the matching groove 520 and the accommodating groove 510 are provided spaced away along a thickness direction of the buffer member 500. The thickness direction of the buffer member 500 herein may be understood as an up-down direction shown in FIG. 2. In this way, structural strength of the buffer member 500 is improved, and the insulating member 400 can be further prevented from being burned by the welding depth-of-fusion of the pole 250 and the buffer member 500 during welding to some extent, so as to extend service life of the insulating member 400 and ensure operation performance of the insulating member 400.

In some embodiments, along a radial direction of the buffer member 500, a minimum spacing between the matching groove 520 and the accommodating groove 510 ranges from 0.35 mm to 1.5 mm. The radial direction of the buffer member 500 herein may be understood as an X direction shown in FIG. 4. The foregoing descriptions mean that multiple distances between the matching groove 520 and the accommodating groove 510 are possible along the X direction, and a shortest distance between the matching groove 520 and the accommodating groove 510 along the X direction is defined as the minimum spacing between the matching groove 520 and the accommodating groove 510.

Therefore, the minimum spacing between the matching groove 520 and the accommodating groove 510 may be understood as H7shown in FIG. 4. When the minimum spacing between the matching groove 520 and the accommodating groove 510 is small, structural strength of the buffer member 500 is reduced, and a risk that the insulating member 400 is burned by the welding depth-of-fusion of the pole 250 and the buffer member 500 during welding also exists, affecting operation performance of the insulating member 400. When the minimum spacing between the matching groove 520 and the accommodating groove 510 is large, operation performance of the matching groove 520 and/or the accommodating groove 510 is degraded under the premise that a size of the buffer member 500 along the radial direction is fixed.

To sum up, in the present disclosure, the minimum spacing between the matching groove 520 and the accommodating groove 510 is set to range from 0.35 mm to 1.5 mm in the present disclosure. In this way, structural strength of the buffer member 500 is improved, and the insulating member 400 can be further prevented from being burned by the welding depth-of-fusion of the pole 250 and the buffer member 500 during welding to some extent, so as to extend service life of the insulating member 400 and ensure operation performance of the insulating member 400. In addition, this can further ensure effect of matching between the matching groove 520 and the second protrusion 420, and ensure effect of matching between the accommodating groove 510 and the first limiting member 251, so as to ensure isolation effect of the buffer member 500.

In some embodiments, along the radial direction of the buffer member 500, the minimum spacing between the matching groove 520 and the accommodating groove 510 ranges from 0.5 mm to 0.7 mm.

In a specific example, along the radial direction of the buffer member 500, the minimum spacing between the matching groove 520 and the accommodating groove 510 is 0.35 mm, 0.5 mm, 0.7 mm, 1 mm, 1.2 mm, 1.5 mm, or the like.

In some embodiments, along an axial direction of the buffer member 500, a depth-of-concavity of the matching groove 520 is less than a distance between a bottom wall of the accommodating groove 510 and a bottom wall of the buffer member 500. The axial direction of the buffer member 500 herein may be understood as an up-down direction shown in FIG. 2. According to the foregoing arrangement, the matching groove 520 and the accommodating groove 510 can be effectively provided spaced away along the thickness direction of the buffer member 500, to further improve structural strength of the buffer member 500. In addition, the insulating member 400 is prevented from being burned by the welding depth-of-fusion of the pole 250 and the buffer member 500 during welding to some extent, so as to extend service life of the insulating member 400.

To sum up, the matching groove 520 and the accommodating groove 510 are provided spaced away along both the radial direction of the buffer member 500 and the axial direction of the buffer member 500.

A battery cell 1000 according to embodiments of the present disclosure is described below with reference to the drawings.

As shown in FIG. 7, a battery cell 1000 according to embodiments of the present disclosure includes a housing 300, a cover plate assembly 200, and an electrode core 320.

As shown in FIG. 7, the cover plate assembly 200 is arranged at an end of the housing 300. The cover plate assembly 200 is the foregoing cover plate assembly 200. A specific structure of the cover plate assembly 200 is not described in detail herein.

As shown in FIG. 3 and FIG. 7, the electrode core 320 is arranged in the housing 300, a first connection tab is arranged on the electrode core 320, and the first connection tab is electrically connected to a pole 250, to implement an electrical connection between the pole 250 and the electrode core 320. This facilitates lead-out of a current of the electrode core 320 through the pole 250, to ensure operation performance of the electrode core 320.

In addition, the electrode core 320 is arranged in the housing 300, so that the housing 300 can be used to protect the electrode core 320, to extend service life of the electrode core 320 and improve safety of using the electrode core 320.

It can be learned from the foregoing structure that, in the battery cell 1000 according to the embodiments of the present disclosure, the foregoing cover plate assembly 200 is used, to ensure operation performance of the battery cell 1000.

In some embodiments, the housing 300 is molded through stamping or welding, and the housing 300 is made of an aluminum material, a steel material, or the like.

The housing 300 and a cover plate body 210 may be two separate members connected through welding, or the housing 300 and the cover plate body 210 may be an integral member molded through stamping.

In some embodiments, as shown in FIG. 7, the battery cell 1000 further includes a collecting pan 100. The collecting pan 100 is arranged between the first connection tab and the cover plate assembly 200. The collecting pan 100 is electrically connected to the first connection tab and the pole 250 separately, to implement an electrical connection between the electrode core 320 and the pole 250. This facilitates lead-out of a current of the electrode core 320 through the pole 250, to ensure operation performance of the electrode core 320, in other words, ensure operation performance of the battery cell 1000.

In some embodiments, the collecting pan 100 is connected to the first connection tab and the pole 250 separately through penetration welding, so that an electrical connection can be formed between the electrode core 320 and the pole 250. This can further ensure strength of a connection between the collecting pan 100 and each of the first connection tab and the pole 250, reduce difficulty of connecting the collecting pan 100 to each of the first connection tab and the pole 250, and improve assembly efficiency and structural stability for the battery cell 1000.

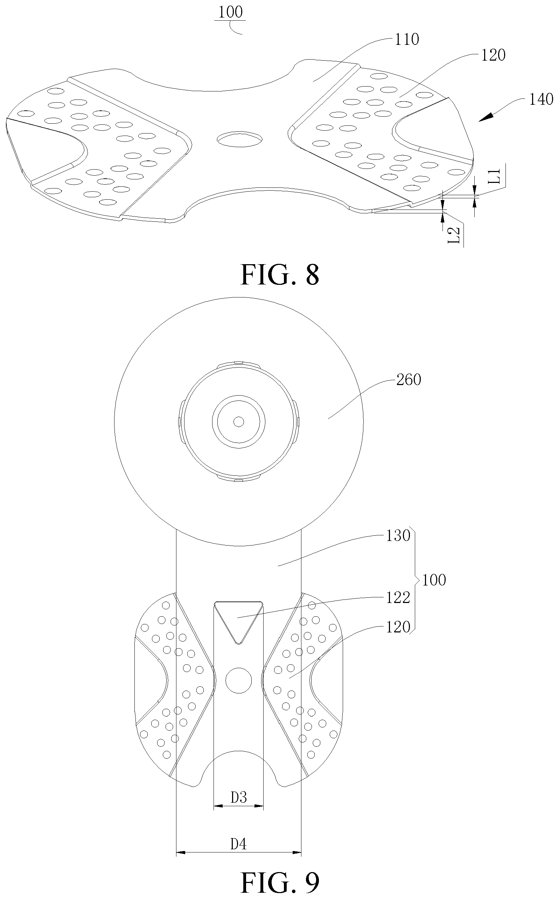

In some embodiments, as shown in FIG. 7 and FIG. 8, the collecting pan 100 includes a pan body 140. At least part of the pan body 140 protrudes in a direction toward the electrode core 320 to form, on the pan body 140, a first connection piece 110 protruding toward the cover plate assembly 200 and a second connection piece 120 protruding toward the electrode core 320. The first connection piece 110 is electrically connected to the pole 250, and the second connection piece 120 is electrically connected to the first connection tab, to implement an electrical connection between the pole 250 and the electrode core 320. This reduces difficulty of connecting the pole 250 to the electrode core 320, and ensures quality of a connection between the pole 250 and the electrode core 320.

In some embodiments, the collecting pan 100 is molded through stamping, to form, on the collecting pan 100, the first connection piece 110 protruding toward the cover plate assembly 200 and the second connection piece 120 protruding toward the electrode core 320. This reduces difficulty of molding the collecting pan 100.

In addition, the collecting pan 100 is arranged to include the pan body 140, so that the collecting pan 100 can be formed into a single-layer structure to reduce space occupied by the collecting pan 100 and improve space utilization of the battery cell 1000. This can also shorten a current flow path, reduce impedance and heat production, ensure operation performance of the battery cell 1000, and improve safety of using the battery cell 1000.

In some embodiments, a thickness of the first connection piece 110 is greater than a thickness of the second connection piece 120, so that the thickness of the first connection piece 110 is large, and a thickness of a body part of the collecting pan 100 is large. In this way, the first connection piece 110 and the second connection piece 120 can be directly formed on the collecting pan 100, to avoid fracture of the collecting pan 100 during molding to some extent. In addition, this can further avoid impact on the electrode core 320 during welding between the first connection piece 110 and the pole 250 to some extent, so as to extend service life of the electrode core 320.

In addition, the thickness of the first connection piece 110 is set to be greater than the thickness of the second connection piece 120, so that the thickness of the second connection piece 120 can be set to be small. This facilitates welding between the second connection piece 120 and the electrode core 320, and increases welding yield.

Optionally, as shown in FIG. 8, the thickness L1 of the second connection piece 120 ranges from 0.1 mm to 0.8 mm. When the thickness of the second connection piece 120 is less than 0.1 mm, structural strength of the second connection piece 120 is reduced, and consequently, the collecting pan 100 is highly susceptible to fracture, and service life of the collecting pan 100 is shortened. When the thickness of the second connection piece 120 is greater than 0.8 mm, difficulty of welding the second connection piece 120 to the electrode core 320 increases.

Therefore, in the present disclosure, the thickness L1 of the second connection piece 120 is set to range from 0.1 mm to 0.8 mm. This avoids fracture of the collecting pan 100 to some extent, and can further facilitate welding between the second connection piece 120 and the electrode core 320 to increase welding yield.

In a specific example, the thickness of the second connection piece 120 is 0.1 mm, 0.2 mm, 0.3 mm, 0.4 mm, 0.5 mm, 0.6 mm, 0.7 mm, 0.8 mm, or the like.

Optionally, as shown in FIG. 8, the thickness of the first connection piece 110 is L2, where 0 mm < L2 - L1 ≤ 0.5 mm. To be specific, the thickness of the first connection piece 110 is greater than the thickness of the second connection piece 120, and a difference between the thickness of the first connection piece 110 and the thickness of the second connection piece 120 is less than 0.5 mm, so that the thickness of the second connection piece 120 can be prevented from being excessively large to some extent. This avoids a problem that a partial structure of the pan body 140 cannot effectively protrude in a direction toward the electrode core 320 to form the second connection piece 120, reduces difficulty of molding the collecting pan 100, and can further reduce a weight of the collecting pan 100 and reduce costs of producing the collecting pan 100.

In a specific example, the thickness of the second connection piece 120 is 0.1 mm, 0.2 mm, 0.3 mm, 0.4 mm, 0.5 mm, or the like.

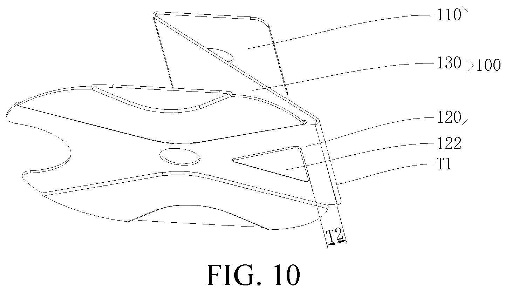

In some embodiments, as shown in FIG. 9 and FIG. 10, the collecting pan 100 includes a first connection piece 110, an intermediate member 130, and a second connection piece 120. The first connection piece 110, the intermediate member 130, and the second connection piece 120 are stacked along an axial direction of the electrode core 320. The first connection piece 110 is electrically connected to the pole 250, and the second connection piece 120 is electrically connected to the first connection tab. To be specific, the collecting pan 100 is not limited to being formed to include the pan body 140, where the first connection piece 110 and the second connection piece 120 are directly formed on the pan body 140, but the collecting pan 100 may alternatively be formed to include the first connection piece 110, the intermediate member 130, and the second connection piece 120. The axial direction of the electrode core 320 herein may also be understood as an up-down direction shown in FIG. 7. The first connection piece 110, the intermediate member 130, and the second connection piece 120 are stacked along the axial direction of the electrode core 320, so that the collecting pan 100 can be used to connect two mechanical parts (for example, the pole 250 and the electrode core 320) arranged along the up-down direction, to reduce difficulty of connecting the pole 250 and the electrode core 320 that are arranged spaced away along the up-down direction. This implements an electrical connection between the electrode core 320 and the pole 250, to facilitate lead-out of a current of the electrode core 320 through the pole 250 and ensure operation performance of the electrode core 320, in other words, ensure operation performance of the battery cell 1000.

In addition, the first connection piece 110, the intermediate member 130, and the second connection piece 120 are stacked along the axial direction of the electrode core 320, so that a size of the collecting pan 100 along a thickness direction can be further reduced, to reduce a size of the battery cell 1000 along an axial direction and reduce difficulty of assembling the battery cell 1000.

In some embodiments, during processing of the collecting pan 100, the collecting pan 100 is first formed into a shape shown in FIG. 9, and then the collecting pan 100 is folded (as shown in FIG. 10) after the processing of the collecting pan 100 is completed, so that the first connection piece 110, the intermediate member 130, and the second connection piece 120 of the collecting pan 100 are stacked along the axial direction of the electrode core 320, and an electrical connection between the pole 250 and the electrode core 320 can be implemented through the collecting pan 100. This reduces difficulty of connecting the pole 250 and the electrode core 320, reduces space occupied by the collecting pan 100, and reduces difficulty of molding the collecting pan 100.

In some embodiments, as shown in FIG. 7 and FIG. 9, the battery cell 1000 further includes a negative electrode cover plate 260. The negative electrode cover plate 260 and the cover plate body 210 are arranged on two opposite sides of the electrode core 320. The electrode core 320 further includes a second connection tab. The negative electrode cover plate 260 is electrically connected to the second connection tab. This facilitates lead-out of a current of the electrode core 320 through the negative electrode cover plate 260, to ensure operation performance of the electrode core 320.

Optionally, one of the first connection tab and the second connection tab is a positive electrode tab of the electrode core 320, and the other is a negative electrode tab of the electrode core 320.

Optionally, as shown in FIG. 7 and FIG. 9, the collecting pan 100 formed as the pan body 140 is arranged on the cover plate assembly 200, and the collecting pan 100 including the first connection piece 110, the intermediate member 130, and the second connection piece 120 is arranged on the negative electrode cover plate 260, so that the battery cell 1000 adopts a single-layer/dual-layer collecting pan design. This helps reduce impedance and improve space utilization and process feasibility of the battery cell 1000.

In some embodiments, the collecting pan 100 formed as the pan body 140 is a positive electrode collecting pan, the collecting pan 100 including the first connection piece 110, the intermediate member 130, and the second connection piece 120 is a negative electrode collecting pan, where the positive electrode collecting pan is made of an aluminum material, and the negative electrode collecting pan is made of a copper material.

Certainly, in some other embodiments, a material of the negative electrode collecting pan is not limited to copper, and may alternatively be steel. When the battery cell 1000 is a sodium-ion battery, the negative electrode collecting pan may alternatively be made of an aluminum material. This is not specifically limited herein.

In some embodiments, as shown in FIG. 9 and FIG. 10, when the collecting pan 100 includes the first connection piece 110, the intermediate member 130, and the second connection piece 120, the second connection piece 120 further includes an identification region 122, and the identification region 122 is provided near a joint between the intermediate member 130 and the second connection piece 120. To be specific, the identification region 122 is provided near the joint between the intermediate member 130 and the second connection piece 120, and the identification region 122 helps an operator quickly determine a position of the joint between the intermediate member 130 and the second connection piece 120, to facilitate folding of the collecting pan 100 from the shape shown in FIG. 9 to a shape shown in FIG. 10. This reduces difficulty of molding the collecting pan 100 and ensures accuracy of a structure of the collecting pan 100 after molding, to avoid reducing an area of the second connection piece 120 to some extent, so as to ensure a connection area between the collecting pan 100 and the electrode core 320 and improve operation performance of the battery cell 1000.

To be specific, in the present disclosure, the identification region 122 is provided, so that difficulty of molding the collecting pan 100 can be reduced, and a position at which the collecting pan 100 is to be folded can be further limited to ensure a connection area between the second connection piece 120 and the electrode core 320.

In some embodiments, as shown in FIG. 10, a connection line between joints that are between opposite side walls of the intermediate member 130 and the second connection piece 120 is a first connection line T1, and a minimum distance between the identification region 122 and the first connection line T1 ranges from -2 mm to +2 mm. This may also be understood as that a connection line between the intermediate member 130 and the second connection piece 120 is the first connection line T1, multiple distances between the identification region 122 and the first connection line T1 are possible, and the minimum distance ranges from -2 mm to +2 mm, where the minimum distance between the identification region 122 and the first connection line T1 may also be understood as T2 shown in FIG. 10.

It should be noted that, when the minimum distance between the identification region 122 and the first connection line T1 is less than -2 mm, an area of the second connection piece 120 is reduced, and consequently, a connection area between the second connection piece 120 and the electrode core 320 is reduced; or when the minimum distance between the identification region 122 and the first connection line T1 is greater than 2 mm, an area of the intermediate member 130 is reduced, structural strength of the intermediate member 130 is reduced, and further, the first connection piece 110, the intermediate member 130, and the second connection piece 120 cannot be stacked along the axial direction of the electrode core 320, affecting performance of the collecting pan 100.

Therefore, in the present disclosure, the minimum distance between the identification region 122 and the first connection line T1 is set to range from -2 mm to +2 mm. This ensures a connection area between the second connection piece 120 and the electrode core 320, and can further ensure an area of the intermediate member 130, so that the first connection piece 110, the intermediate member 130, and the second connection piece 120 can be effectively stacked along the axial direction of the electrode core 320 to ensure performance of the collecting pan 100.

In a specific example, the minimum distance between the identification region 122 and the first connection line T1 is -2 mm, -1 mm, 0 mm, 1 mm, or 2 mm.

Optionally, as shown in FIG. 9, a maximum width of the identification region 122 is D3, and a minimum width of the intermediate member 130 is D4, where 0.2 < D3/D4 < 1. To be specific, the maximum width of the identification region 122 is less than the minimum width of the intermediate member 130, and a ratio of the maximum width of the identification region 122 to the minimum width of the intermediate member 130 is greater than 0.2. This avoids reducing structural strength of the collecting pan 100 due to the arrangement of the identification region 122 to some extent, and can further ensure that the identification region 122 has a specific width, so that the identification region 122 can be used to limit a position at which the collecting pan 100 is to be folded, to reduce difficulty of molding the collecting pan 100.

In some embodiments, the ratio of the maximum width of the identification region 122 to the minimum width of the intermediate member 130 is 0.3, 0.4, 0.5, 0.6, 0.7, 0.8, 0.9, or the like.

In some embodiments, as shown in FIG. 9 and FIG. 10, the identification region 122 is a through-hole passing through the second connection piece 120 or a groove provided on the second connection piece 120. To be specific, the identification region 122 may be formed into a through-hole passing through the second connection piece 120, or may be formed into a groove provided on the second connection piece 120. This is not specifically limited herein, provided that an operator can directly observe a position of the identification region 122 to determine, based on the identification region 122, a position at which the collecting pan 100 is to be folded.

The figure shows the identification region 122 in a triangular shape. However, in some other embodiments, the identification region 122 may alternatively be in a rectangular shape, a circular shape, an elliptic shape, an irregular pattern, or the like.

In some embodiments, as shown in FIG. 7, the battery cell 1000 is a cylindrical battery, so that the battery cell 1000 has a high capacity, long cycle life, a wide range of applicable ambient temperature, and other advantages, to ensure operation performance of the battery cell 1000.

A battery assembly according to embodiments of the present disclosure is described below.

A battery assembly according to embodiments of the present disclosure includes multiple battery cells 1000.

The battery cell 1000 is the foregoing battery cell 1000, and a specific structure of the battery cell 1000 is not described in detail herein.

It can be learned from the foregoing structure that, in the battery assembly according to the embodiments of the present disclosure, the foregoing battery cell 1000 is used, to improve operation performance of the battery assembly.

It should be noted that the battery assembly herein may be a battery pack, a battery module, or the like.

An electric device according to embodiments of the present disclosure is described below.

An electric device according to embodiments of the present disclosure includes a battery assembly.

The battery assembly is the foregoing battery assembly, and a specific structure of the battery assembly is not described in detail herein.

It can be learned from the foregoing structure that, in the electric device according to the embodiments of the present disclosure, the foregoing battery assembly is used, to improve operation performance of the electric device.

It should be noted that the electric device herein may be but is not limited to a mobile phone, a tablet computer, a notebook computer, an electric toy, an electric tool, an electric bicycle, an electric vehicle, a ship, a spacecraft, and the like.

The electric toy may be a fixed or mobile electric toy, for example, a game console, an electric toy car, an electric toy ship, and an electric toy airplane. The spacecraft may include an airplane, a rocket, a space shuttle, a spaceship, and the like. The electric tool includes an electric metal cutting tool, an electric grinding tool, an electric assembly tool, and a railway-specific electric tool, for example, an electric drill, an electric grinder, an electric wrench, an electric screwdriver, an electric hammer, an electric impact drill, a concrete vibrator, and an electric planer.

In the descriptions of the present disclosure, it should be noted that, unless otherwise explicitly specified or defined, the terms "mounting" and "connection" should be understood in a broad sense. For example, the "connection" may be a fixed connection, a detachable connection, or an integral connection, or may be a mechanical connection or an electrical connection. Persons of ordinary skill in the art may understand specific meanings of the foregoing terms in the present disclosure based on specific circumstances.

Specific structures of other constituents, such as the electrode core 320, of the cover plate assembly 200 of the battery cell 1000, the battery cell 1000, the battery assembly, and the electric device according to the embodiments of the present disclosure are known to persons of ordinary skill in the art. Details are not described herein.

In the descriptions of this specification, descriptions with reference to the term "embodiment", "example", or the like mean that a specific feature, structure, material, or characteristic described with reference to the embodiment or example is included in at least one embodiment or example of the present disclosure. In this specification, exemplary descriptions of the foregoing terms do not necessarily indicate a same embodiment or example. In addition, specific features, structures, materials, or characteristics in the descriptions may be combined in a proper manner in any one or more embodiments or examples.

Although the embodiments of the present disclosure are shown and described, persons of ordinary skill in the art can understand that various changes, modifications, replacements, and variations may be made to the embodiments without departing from the principle or essence of the present disclosure. The scope of the present disclosure is limited by the claims and their equivalents.

## Claims

1. A cover plate assembly of a battery cell, comprising:
a cover plate body, a mounting opening being provided on the cover plate body;
a pole, the pole being arranged through the mounting opening;
an insulating member, the insulating member being arranged in the mounting opening and being located between the pole and the cover plate body, so that the cover plate body is insulated and spaced away from the pole, the pole having a first limiting member located on one side of the cover plate body, and the first limiting member being configured to fasten the pole and the insulating member to the cover plate body through position limiting; and
a buffer member, the buffer member being arranged between the insulating member and the first limiting member.

2. The cover plate assembly of the battery cell according to claim 1, wherein an accommodating groove is provided on the buffer member, and at least part of the first limiting member is arranged in the accommodating groove, so that at least part of the buffer member is located at a periphery of the first limiting member;
optionally wherein a thickness H1 of the first limiting member ranges from 0.5 mm to 1.5 mm;
further optionally wherein a thickness H2 of the at least part of the buffer member located at the periphery of the first limiting member is greater than the thickness H1 of the first limiting member; and/or a width H3 of the at least part of the buffer member located at the periphery of the first limiting member ranges from 1 mm to 3 mm.

3. The cover plate assembly of the battery cell according to claim 2, wherein an outer surface of the first limiting member is flush with an outer surface of the buffer member located at the periphery of the first limiting member.

4. The cover plate assembly of the battery cell according to claim 2 or 3, wherein a width H4 of the accommodating groove ranges from 0.2 mm to 2 mm; and/or
a distance H5 between a bottom wall of the accommodating groove and a bottom wall of the buffer member ranges from 0.4 mm to 2.5 mm.

5. The cover plate assembly of the battery cell according to any one of claims 1 to 4, wherein the pole is welded to the buffer member.

6. The cover plate assembly of the battery cell according to any one of claims 1 to 5, wherein the pole is a hollow member for defining an electrolyte solution filling channel, the electrolyte solution filling channel is provided with an inlet and an outlet, and at least one of the inlet and the outlet is provided with a blocking member for closing the inlet or the outlet;
optionally wherein the inlet and the outlet are each provided with the blocking member.

7. The cover plate assembly of the battery cell according to any one of claims 2 to 6, wherein along a radial direction of the pole, the buffer member and the insulating member are matched to limit movement displacement of the buffer member;
optionally wherein a ring-shaped first protrusion is arranged on the insulating member, and the first protrusion is arranged around a peripheral wall of the buffer member.

8. The cover plate assembly of the battery cell according to claim 7, wherein a second protrusion protruding toward the buffer member is arranged on the insulating member, and the insulating member is provided with a stop surface located on an inner side, facing the mounting opening, of the second protrusion; and a matching groove is provided on the buffer member, the second protrusion is matched with the matching groove, and a part of the buffer member is matched with the stop surface;
optionally wherein a depth-of-concavity H6 of the matching groove ranges from 0.3 mm to 1 mm;
optionally wherein the matching groove and the accommodating groove are provided spaced away along a thickness direction of the buffer member;
further optionally wherein along a radial direction of the buffer member, a minimum spacing H7 between the matching groove and the accommodating groove ranges from 0.35 mm to 1.5 mm; and/or along an axial direction of the buffer member, a depth-of-concavity of the matching groove is less than a distance between a bottom wall of the accommodating groove and a bottom wall of the buffer member.

9. A battery cell, comprising:
a housing;
a cover plate assembly, the cover plate assembly being arranged at an end of the housing, and the cover plate assembly being the cover plate assembly according to any one of claims 1 to 15; and
an electrode core, the electrode core being arranged in the housing, a first connection tab being arranged on the electrode core, and the first connection tab being electrically connected to a pole.

10. The battery cell according to claim 9, further comprising a collecting pan, the collecting pan being arranged between the first connection tab and the cover plate assembly, and the collecting pan being electrically connected to the first connection tab and the pole separately.

11. The battery cell according to claim 10, wherein the collecting pan comprises a pan body, at least part of the pan body protrudes in a direction toward the electrode core to form, on the pan body, a first connection piece protruding toward the cover plate assembly and a second connection piece protruding toward the electrode core, the first connection piece is electrically connected to the pole, and the second connection piece is electrically connected to the first connection tab;
optionally wherein a thickness of the first connection piece is greater than a thickness of the second connection piece; and/or a thickness L1 of the second connection piece ranges from 0.1 mm to 0.8 mm, and a thickness of the first connection piece is L2, wherein 0 mm < L2 - L1 ≤ 0.5 mm.

12. The battery cell according to claim 10 or 11, wherein the collecting pan comprises a first connection piece, an intermediate member, and a second connection piece, the first connection piece, the intermediate member, and the second connection piece are stacked along an axial direction of the electrode core, the first connection piece is electrically connected to the pole, and the second connection piece is electrically connected to the first connection tab.

13. The battery cell according to any one of claims 9 to 12, wherein the battery cell is a cylindrical battery.

14. A battery assembly, comprising a plurality of battery cells according to any one of claims 9 to 13.

15. An electric device, comprising the battery assembly according to claim 14.
